# EUROPEAN PATENT APPLICATION

(11) **EP 4 538 091 A1**
(43) Date of publication of application: **16.04.2025**
(21) Application number: 24205159.7
(22) Date of filing: 08.10.2024
(51) Int. Cl.: B60K 35/10, B60K 35/22, G06F 3/04847, G06F 3/0488, G06F 3/04886, G06F 3/04817

(54) **CUSTOMIZABLE SAFE TOUCH ON VEHICLE DISPLAY**

(30) Priority: 10.10.2023 US 202318483947
(71) Applicant: Volvo Car Corporation, 405 31 Göteborg (SE)
(72) Inventor: JAKOBSSON, Magnus, 40531 Göteborg (SE)
(74) Representative: Maiwald GmbH

(57) **Abstract**

Systems/techniques that facilitate customizable safe touch control of vehicle operation are provided. In various embodiments, a system can enable generation of virtual icons representative of hardware-based components of a vehicle on a display. In various aspects, the system can receive touch input to activate the virtual icons and operate the associated hardware-based components of the vehicle through complex touch patterns that ensure touch activation and touch coordinates satisfy safety regulations and requirements. In various instances, the system can enable customization of the layout, visual representation, and labeling of the virtualized icons based on user preference through an interface on the vehicle display.

## Description

### TECHNICAL FIELD

The subject disclosure relates generally to soft buttons on vehicle touch displays to facilitate customizable safe touch control of vehicle operation.

### BACKGROUND

Physical buttons in vehicles have been a common interface for controlling various functions and features for many years. However, they come with various issues and drawbacks. Physical buttons are fixed in place and serve specific functions. Unlike soft buttons or touchscreens, they cannot be easily reconfigured or customized to adapt to changing user needs or preferences. The presence of numerous physical buttons can detract from the interior aesthetics of a vehicle, making it appear less modern and sleek, especially in luxury or high-end car designs. In compact vehicles or those with minimalist design philosophies, there may not be enough space to accommodate all the necessary physical buttons without sacrificing comfort or aesthetics. Physical buttons can occupy valuable dashboard space, potentially limiting the size and placement of screens for infotainment and navigation systems. Furthermore, physical buttons are an aging design as vehicles with an overabundance of physical buttons may appear dated and less appealing to consumers who expect modern, user-friendly features. As vehicles have become more advanced and packed with features, the dashboard can become cluttered with an array of physical buttons for different functions. This can make the interior of the vehicle look complex and confusing. New drivers or those unfamiliar with a particular vehicle may find it challenging to locate and use all the physical buttons, especially if they are not intuitively labeled or grouped logically. Moreover, physical buttons are subject to wear and tear over time. Frequent use can lead to buttons becoming less responsive or even malfunctioning, requiring maintenance or replacement.

Soft buttons in vehicle displays have commonly replaced physical buttons in vehicles, however, display soft buttons exhibit various shortcomings as well. Soft buttons on a vehicle display are often limited to the functions and features that the automaker has preprogrammed into the system. This means that users may not have access to certain functions they desire, even if the hardware is capable of supporting them. An abundance of physical buttons or switches are still needed to operate various vehicle functionalities that display soft buttons don't support. Utilization of both touch display and physical buttons can make locating features challenging and confusing to drivers. Furthermore, some vehicle displays have a fixed user interface design with predefined soft buttons that cannot be customized or rearranged by the user. This lack of flexibility can be frustrating for drivers who want to prioritize certain functions or features. Moreover, soft buttons may have labels or icons that are not immediately clear or intuitive, leading to user confusion and the need to experiment to figure out their functions. There is a need in the art to mitigate or overcome some of the shortcomings of physical buttons and soft buttons in displays to control vehicle functionality.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, devices, systems, computer-implemented methods, apparatus or computer program products that facilitate customizable safe touch control of vehicle operation.

According to an embodiment, a system, comprises a processor that executes computer-executable components stored in a non-transitory computer-readable memory, the computer-executable components comprising: a virtualization component that generates virtual icons representative of hardware-based components of a vehicle; a display component that displays the virtualized icons on a touch display; and an interface component that receives input in connection with activation of the virtualized icon to implement functionality of the associated hardware-based component.

According to an embodiment, a computer-implemented method, comprises using a virtualization component to enable a user to generate virtual icons representative of hardware-based components of a vehicle; using a display component to display the virtualized icons on a touch display; and using an interface component to receive input in connection with activation of the virtualized icon to implement functionality of the associated hardware-based component.

According to yet another embodiment, a computer program product comprises a non-transitory computer-readable memory having program instructions embodied therewith, the program instructions executable by a processor to cause the processor to: use a virtualization component to enable a user to generate virtual icons representative of hardware-based components of a vehicle; use a display component to display the virtualized icons on a touch display; and use an interface component to receive input in connection with activation of the virtualized icon to implement functionality of the associated hardware-based component.

According to one or more embodiments, the above-described systems can be implemented as computer-implemented methods or computer program products.

### DESCRIPTION OF THE DRAWINGS

FIG. 1 illustrates a block diagram of an example, non-limiting system that facilitates customizable safe touch control of vehicle operation in accordance with one or more embodiments described herein.
FIG. 2 illustrates a block diagram of an example, non-limiting system that facilitates customizable safe touch control of vehicle operation in accordance with one or more embodiments described herein.
FIG. 3 illustrates a block diagram of an example, non-limiting system that facilitates customizable safe touch control of vehicle operation in accordance with one or more embodiments described herein.
FIG. 4 illustrates an enlarged view of an example GUI displayed on a vehicle touchscreen in accordance with one or more embodiments described herein.
FIG. 5 illustrates an enlarged view of an example GUI displayed on a vehicle touchscreen in accordance with one or more embodiments described herein.
FIG. 6 illustrates an enlarged view of an example GUI displayed on a vehicle touchscreen in accordance with one or more embodiments described herein.
FIG. 7 illustrates a flow diagram of an example, non-limiting computer-implemented method that facilitates customizable safe touch control of vehicle operation in accordance with one or more embodiments described herein.
FIG. 8 illustrates a flow diagram of an example, non-limiting computer-implemented method that facilitates customizable safe touch control of vehicle operation in accordance with one or more embodiments described herein.
FIG. 9 illustrates a flow diagram of an example, non-limiting computer-implemented method that facilitates customizable safe touch control of vehicle operation in accordance with one or more embodiments described herein.
FIG. 10 illustrates a block diagram of an example, non-limiting operating environment in which one or more embodiments described herein can be facilitated.
FIG. 11 illustrates an example networking environment operable to execute various implementations described herein.

### DETAILED DESCRIPTION

The following detailed description is merely illustrative and is not intended to limit embodiments or application/uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Soft buttons in vehicles involve digital, touch-sensitive icons displayed on a screen or interface within the vehicle. They can vary in design and function, including controls for audio, climate, navigation, phone calls, vehicle settings, and infotainment features. Physical buttons in vehicles are still typically used for critical functions of vehicle operation, including basic controls like turning on and off lights, emergency hazard lights, opening and closing windows, activating windshield wipers, and engaging the handbrake.

Unfortunately, existing techniques for using soft and physical buttons to control vehicle operations can be unreliable, unsafe, and limited for various reasons.

First, physical buttons in vehicles often have an overwhelming layout, consisting of an excessive number of physical buttons on the dashboard that can overwhelm the driver, making it challenging to quickly locate and use the necessary controls. Poor placement or ergonomics of physical buttons can lead to distraction and safety risks while driving. For example, drivers may fumble to find and use various physical buttons, taking their hands off the wheel. This may also cause the driver to have attention off the road for extended periods of time. Furthermore, the multitude of physical buttons present in a small space can make it challenging for the driver to accurately press the intended button without taking their eyes off the road. This can result in accidental activation of the wrong function. Moreover, in modern vehicles equipped with more advanced features, new users may struggle to understand the functions and their placements, causing delays in accessing essential controls.

Second, physical buttons are unable to be customized, as they have fixed locations and functions. making it difficult to adapt their layout or functionality based on driver preferences. Furthermore, physical buttons require dedicated space on the dashboard or center console, consuming valuable space on the dashboard and limiting design flexibility as well as potentially hindering the integration of newer technologies or sleeker design elements. Physical buttons may not be able to accommodate such new advancements and features without complete redesigns of the control panel. Moreover, soft buttons in vehicles also lack customization (e.g., icon visuals, icon labels, layout). Such lack of customization can also cause driver distraction as new drivers may find it challenging to find and select various functionalities.

Third, soft buttons used in vehicles currently have limited functionality for operating vehicle controls. Soft button functionality has been primarily used for basic control operations (e.g., climate control, phone calls, navigation, settings, radio, infotainment features). Soft button functionality has not been extended to further control essential driving functions and operations (e.g., turn signals, window activation, gear shifting, windshield wipers).

Furthermore, soft and physical buttons often utilize one touch or one push activation to activate the intended vehicle functionality. However, such a method can prove unsafe in various instances. For example, one touch activation of soft buttons can cause unintended activation of a vehicle functionality (e.g., mistakenly pressing the touch display, unintentionally touching the touch display). As another example, unintentional presses of a physical button can activate a critical vehicle functionality (e.g., unintentionally flashing a high beam light, opening a window, unlocking a door, activating a turn signal, turning on cruise control). Such accidental activation can pose safety risk in various instances. For example, inadvertently turning off the headlights while driving at night could hinder visibility and risk an accident. Unintentionally activating high beam lights or windshield wipers can also temporarily impair visibility, creating a hazardous situation. As another example, mistakenly turning on the hazard light or activating a turn signal while driving could confuse other drivers on the road and potentially cause an accident. A driver attempting to merge or pass the vehicle may cause a collision if the vehicle continues straight rather than turning as signaled. Misleading signals may also cause unnecessary maneuvers or rear-end accidents if a driver believes the vehicle is stopping or slowing down due to the hazard lights being on. Unexpected lane changes can also result from unintentional signaling and may cause side-swipe accidents.

Accordingly, systems or techniques that can address one or more of these technical problems can be desirable.

Various embodiments described herein can address one or more of these technical problems. One or more embodiments described herein can include systems, computer-implemented methods, apparatus, or computer program products that can facilitate customizable safe touch control of vehicle operation. That is, the present inventors realized that various disadvantages associated with existing techniques for operating vehicle functionality can be ameliorated by customizable safe touch control of vehicle operation.

In various embodiments, the virtualization component can enable generation of virtual icons representative of hardware-based components of a vehicle on a display component. In various aspects, the interface component can receive touch input to activate the virtual icon and operate the associated hardware-based component of the vehicle. In various aspects, the interface component can enable customization of the virtualized icons based on user preference (e.g., customized icon visuals, layout, or labeling). In various embodiments, the compliance component can ensure that touch activation and touch coordinates satisfy regulations and requirements. For instance, the compliance component can require double touch input on the interface component to activate the vehicle functionality and prevent unintentional activation (e.g., unintentional gear shift, window operation, unlocking of the doors). In various aspects, a vehicle can be outfitted with vehicle microphones. More specifically, the vehicle can utilize such microphones within the vehicle to enable voice recognition for voice generation of virtual icons. Thus, only the driver or authorized passengers may generate virtual icons for vehicle control through voice recognition.

It should be appreciated that the herein figures and description provide non-limiting examples of various embodiments and are not necessarily drawn to scale.

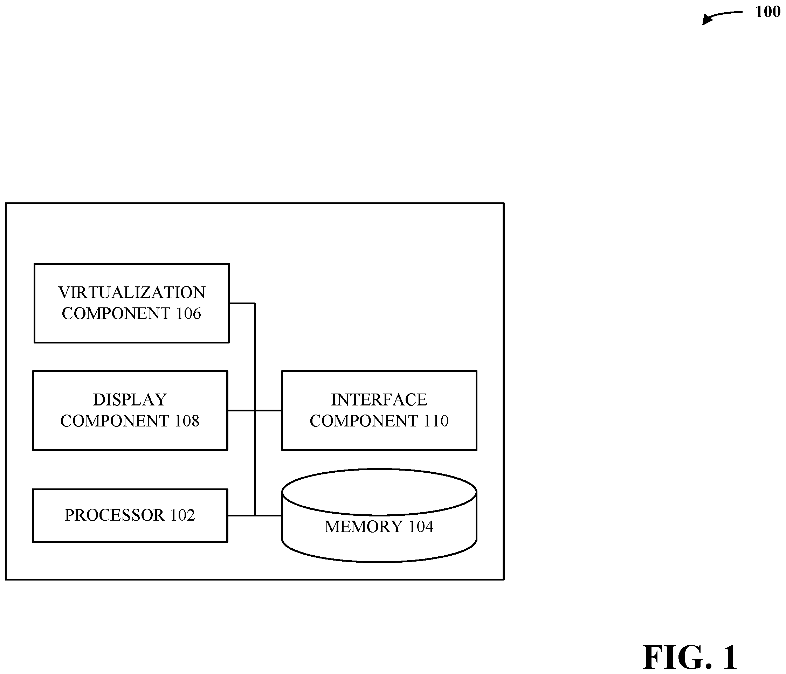

FIG. 1 illustrates a block diagram of an example, non-limiting system 100 that facilitates customizable safe touch control of vehicle operation in accordance with one or more embodiments described herein.

In various aspects, the vehicle can be any suitable vehicle or automobile (e.g., can be a car, a truck, a van, a motorcycle, plane, boat, helicopter). In various instances, the vehicle can have or otherwise exhibit any suitable type of propulsion system (e.g., can be an electric vehicle, can be a gasoline-powered or diesel-powered vehicle, can be a hybrid vehicle). In some cases, the vehicle can be driving on any suitable road, street, lane, or highway at any suitable speed. In other cases, the vehicle can, while driving, be stopped at an intersection, at a traffic light, at a stop sign, at a cross-walk, or at a traffic jam. In yet other cases, the vehicle can be parked rather than driving (e.g., can be parked in a parking lot, by a curb, or in a driveway). In any case, the vehicle can comprise, have, or otherwise be outfitted or equipped with the system 100. In other words, the system 100 can be onboard the vehicle.

In various embodiments, the system 100 can comprise a processor 102 (e.g., computer processing unit, microprocessor) and a non-transitory computer-readable memory 104 that is operably or operatively or communicatively connected or coupled to the processor 102. The non-transitory computer-readable memory 104 can store computer-executable instructions which, upon execution by the processor 102, can cause the processor 102 or other components of the system 100 (e.g., virtualization component 106, display component 108, interface component 110) to perform one or more acts. In various embodiments, the non-transitory computer-readable memory 104 can store computer-executable components (e.g., virtualization component 106, display component 108, interface component 110), and the processor 102 can execute the computer-executable components.

In various embodiments, the system 100 can comprise a virtualization component 106. In various aspects, as described herein, the virtualization component 106 can generate virtual icons representative of hardware-based components of a vehicle. For example, the virtualization component 106 can generate a virtual icon representative of external or internal vehicle lighting (e.g., turn signals, hazard lights, headlights, dome lights, fog lights).

The virtualization component 106 can facilitate executing and controlling one or more operations of the vehicle using machine-executable instructions upon activation of a virtual icon. In this regard, embodiments of system 100 and other systems described herein can include one or more machine-executable components embodied within one or more machines (e.g., embodied in one or more computer readable storage media associated with one or more machines). Such components, when executed by the one or more machines (e.g., processors, computers, computing devices, virtual machines, etc.) can cause the one or more machines to perform the operations described.

In various embodiments, the system 100 can comprise a display component 108. In various aspects, as described herein, the display component 108 can display the generated virtual icons on a vehicle display. For example, the display component 108 can display a virtual icon representative of external or internal vehicle lighting on the vehicle display.

The display component 108 can comprise suitable hardware that registers input events in response to touch (e.g., by a finger, stylus, gloved hand, pen, etc.). The type of the display component 108 can vary and can include, but is not limited to, a resistive touchscreen, a surface capacitive touchscreen, a projected capacitive touchscreen, a surface acoustic wave touchscreen, and an infrared touchscreen. In various embodiments, the display component 108 can be positioned on the dashboard of the vehicle, such as on or within the center stack or center console of the dashboard. However, the position of the display component 108 within the vehicle can vary. The display component 108 can also comprise one or more display screens positioned in multiple locations of the vehicle (e.g., a display on the steering wheel and dashboard). Multiple displays of the display component 108 can enable interaction with the virtual icons to be limited to the driver. For example, virtual icons representing critical vehicle functions (e.g., gear shifts, turn signals, seat positions) can be exclusively displayed on the steering wheel display to prevent activation by another passenger while virtual icons representing other functionalities (e.g., window and sunroof operation, internal vehicle lighting, door locking and unlocking) can be displayed on the center dashboard display. No matter the position or multitude of displays, the driver can customize the layout and arrangement of the virtual icons based on preference.

In various embodiments, the system 100 can comprise an interface component 110. In various aspects, as described herein, the interface component 110 can receive input in connection with activation of the virtual icon to implement functionality of the associated hardware-based component. For example, a virtual icon representative of vehicle lighting operation can receive touch input from the driver to activate and implement the functionality of operating vehicle lighting (e.g., turning a left turn signal on, turning off hazard lights, switching headlights to low beam).

The interface component 110 can be displayed on the display component 108 to facilitate interfacing with a graphical user interface (GLTI) rendered on the display. The interface component 110 can be one or more interactive GUIs that facilitate accessing or controlling various functions and applications of the vehicle. In this regard, the GUIs can present one or more selectable graphical elements or virtual icons that can respectively correspond to a control for a function of the vehicle, an application, a function of the application, interactive data, and the like, wherein selection or interaction with a graphical element or virtual icon as displayed on the display component 108 via touch activates corresponding functionality. For example, one or more GUIs displayed on the display component 108 can include selectable buttons or bars corresponding to a vehicle operations function, a vehicle navigation application, a media application, a phone application, a back-up camera function, a car settings function, a parking assist function, and the like. In some implementations, selection of a button or bar corresponding to an application or function can result in generation of a new window or GUI comprising additional selectable icons or widgets associated with the selected application. For example, selection of the lighting virtual icon can result in generation of a new GUI or window that includes additional buttons or widgets for various vehicle lighting and lighting settings (e.g., turn signal, hazard lights, fog lights, headlights, low beam, high beam). The type and appearance of the selectable graphical elements can vary. For example, the selectable graphical elements can include icons, symbols, widgets, windows, tabs, text, images, and the like.

In various aspects, based on input received via user interaction with the GUI displayed on the display component 108, the virtualization component 106 can issue or send control commands to control or execute a vehicle function or application. For example, the driver can touch select a virtual icon on the interface component 110 associated with a hardware-based component of the vehicle (e.g., a virtual icon associated with actuating the windows of the vehicle). Upon touch input of the interface component 110, the virtual icon can be activated. Accordingly, the virtualization component 106 can activate or operate the associated hardware-based component of the vehicle functionality represented by the activated virtual icon (e.g. open the driver seat window, close the sunroof, further raise the passenger seat window).

In various aspects, the interface component 110 can allow for customized configuration of the generated virtual icons (e.g., virtual icon function, graphics, labeling, layout) based on the user's preference. The interface component 110 can provide a variety of GUI configurations to display the virtual icons on the display component 108. The GUI can comprise a variety of configurations to display a home screen that contains the generated virtual icons created by the user and a virtual icon that enables creation of new icons upon activation. The user can begin generating a new virtual icon through touch activation of the virtual icon that can create new icons. The user can then select the vehicle functionality that the new virtual icon would operate from a selection of functionalities not yet generated as virtual icons. The selection of vehicle functionalities can be displayed in any suitable interface configuration (e.g., as a grid layout, a slideshow with navigation arrows, a list view, an interactive layout with sliders). This can be displayed in a new GUI or window or within the existing window. Furthermore, the user can select an icon symbol to be displayed on the virtual icon given a selection of images or can upload a separate image (e.g., can upload through USB connection, Bluetooth, wireless screen mirroring, mobile app integration, cloud storage integration) to be used as the icon visual. The selection of images can be displayed in any suitable interface configuration (e.g., as a grid layout, a slideshow with navigation arrows, a list view, an interactive layout with sliders) and can be displayed in a new GUI or window or within the existing window. Moreover, the user can change the labeling of the new virtual icon from the original vehicle functionality label selected by the user (e.g., changing the label of the icon from lighting to illumination). The GUI can comprise any suitable configuration to allow text editing of the virtual icon label (e.g., keyboard display after selecting an edit button). Thus, after selecting a functionality, visual, and label for the new virtual icon, the new virtual icon will now be displayed in the home screen interface that displays the virtual icons.

The interface component 110 can include a GUI configuration that enables editing or customization of the home screen of generated virtual icons displayed. For example, layout and order of the virtual icons on the vehicle display can be altered based on the user's preference or frequency of use of the virtual icon (e.g., if a user uses a virtual icon operative of windshield wipers frequently, the user can move the virtual icon closer on the vehicle display or enlarge the size of the virtual icon). The GUI configuration for display customization can also enable the user to change the icon visuals and labels any number of times of already created virtual icons. Such customization can enable flexibility in vehicle operation to adapt to changing needs or driving behavior of the user.

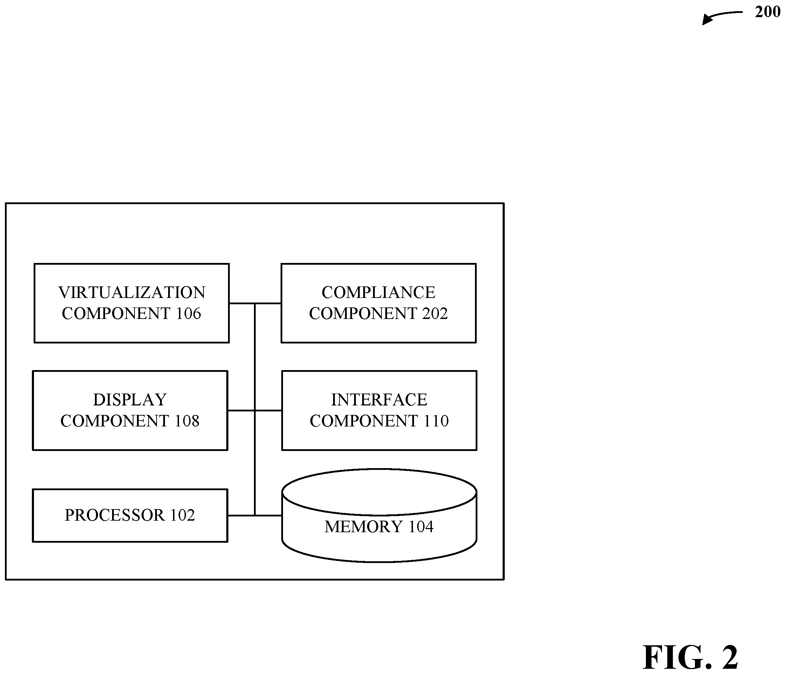

FIG. 2 illustrates a block diagram of an example, non-limiting system 200 that can facilitate customizable safe touch control of vehicle operation in accordance with one or more embodiments described herein. As shown, the system 200 can, in some cases, comprise the same components as the system 100, and can further comprise a compliance component 202.

In various embodiments, the interface component 110 can engage the compliance component 202 to ensure that activation, touch coordinates, and generated visuals of virtual icons to operate vehicle functionalities meet or satisfy safety requirements and regulations. In various aspects, touch activation of virtual icons on the display component 108 can satisfy ISO-26262 level ASIL-B through utilization of complex touch patterns. The complex touch patterns can consist of a double touch input on the interface component 110 to activate a virtual icon to operate the associated vehicle functionality. Two touch activation can mitigate the likelihood of accidental or unauthorized activation of vehicle functionality by providing an additional layer of confirmation through a second touch input. For example, a double touch input can be implemented by requiring a first touch of a virtual icon, followed by a second touch of the virtual icon. As another example, double touch input can comprise a first touch of a virtual icon followed by a slide from a first position to a second position. Moreover, another double touch input can comprise a slide from a first position to a second position. The interface component 110 can be configured to require one touch or two touch input to select various buttons on the display that do not activate any vehicle functionality (e.g., selecting the image to be used as the icon visual during icon generating, scrolling to view additional icons or list options). Utilizing double touch input for activation of the soft buttons on the display component 108 can enable safe operation of essential and critical vehicle operations that conventional systems using one touch input activation can't provide.

In various instances, the compliance component 202 can enforce a time restriction between the two touch inputs to further enhance safety and avoid unintentional or accidental touches of the display component 108. For example, the compliance component can implement a time restraint so the second touch input must occur after a defined amount of time from the first touch input. Thus, rapid activations of various vehicle functions can be prevented to maintain control and safe operation of the vehicle. Rapid touch input of virtual icons can lead to inadvertent activation of vehicle functionalities (e.g., accidental activation of high beam lights, cruise control, or windows of a vehicle). Furthermore, a time restraint can be placed on the second touch input to ensure that the second touch occurs before a certain amount of time after the first touch. Such time restraint can mitigate accidental activations by ensuring both touches occur intentionally by the user and activations don't occur from stray or unintended presses. If a second touch does not occur within a suitable determined time frame after the first touch, the interface component 110 can reset the virtual icon activation (e.g., return to main menu, disregard the first touch).

Furthermore, the compliance component 202 can restrict activation or display of certain virtual icons while the vehicle is in motion to prevent hazardous driving conditions (e.g., restricting opening of the trunk or hood while the vehicle is in motion). For example, virtual icons where activation may cause a visual obstruction to the driver can be disabled until the vehicle is placed in park (e.g., the trunk, the hood). As another example, virtual icons where activation may pose safety hazards can be disabled while the vehicle is in motion (e.g., opened fuel door, open charging port). In various instances, temporary disablement of such virtual icons can mitigate accidental activation or opening of the vehicle's fuel door or charging port, preventing possibilities of fuel to spill out, allow fuel vapors to escape, or expose live electrical components, as such instances can pose fire hazards, electrical chocks, or damage to the vehicle.

In various embodiments, the compliance component 202 can ensure that the touch coordinates of the generated virtual icons satisfy ISO-26262 regulation. The display component 108 must be developed according to ISO-26262 to at least level ASIL-A. An integrity mechanism can be implemented to confirm that the touch coordinates are accurate and correct when sent from the interface component 110 on the display component 108 to be evaluated. For example, a graphic engine can be used to generate a graphic on the display component 108. A frame buffer can then prepare the graphic to display, and engage a graphic monitor to read out the frame buffer to ensure graphic accuracy and correctness to operate the appropriate associated hardware-based component of the vehicle. Once the integrity of the graphic has been checked, the display component 108 can display the physical graphic. The compliance component 202 can implement the integrity mechanism (e.g. cyclic redundancy check (CRC), Kalman filtering, singular value decomposition (SVD), machine learning) to ensure that the touch coordinates are accurate when touch input is sent to the virtualization component 106 to operate the vehicle functionality. For example, cyclic redundancy check (CRC) can be used as the integrity mechanism.

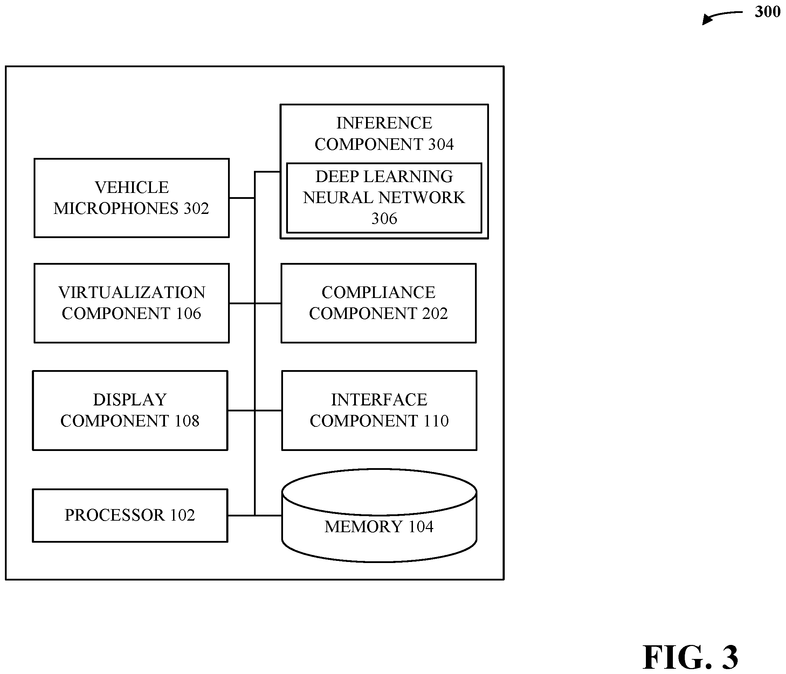

FIG. 3 illustrates a block diagram of an example, non-limiting system 300 that can facilitate voice generation of customizable safe touch control of vehicle operation in accordance with one or more embodiments described herein. As shown, the system 300 can, in some cases, comprise the same components as the system 200, and can further comprise a set of vehicle microphones 302, an inference component 304, and a deep learning neural network 306.

In various aspects, the set of vehicle microphones 302 can include any suitable number of any suitable types of microphones (e.g., of sound-capture devices). In various instances, the set of vehicle microphones 302 can be integrated into the vehicle. For example, such one or more microphones can be integrated into any suitable interior vehicle surface (e.g., dashboard, steering wheel, vehicle doors, vehicle ceiling) so as to capture or otherwise record sounds or noises that occur within the vehicle. The recorded audio by the vehicle microphones 302 can include any suitable number of audio clips that can represent noises occurring within the vehicle.

In various embodiments, the system 300 can comprise an inference component 304. In various instances, as described herein, the inference component 304 can detect and identify passenger and driver voices, as well as any suitable spoken activation phrase or wording to initiate generation of a new virtual icon.

In various embodiments, the inference component 304 can electronically store, electronically maintain, electronically control, or otherwise electronically access the deep learning neural network 306. In various aspects, the deep learning neural network 306 can have or otherwise exhibit any suitable internal architecture. For instance, the deep learning neural network 306 can have an input layer, one or more hidden layers, and an output layer. In various instances, any of such layers can be coupled together by any suitable interneuron connections or interlayer connections, such as forward connections, skip connections, or recurrent connections. Furthermore, in various cases, any of such layers can be any suitable types of neural network layers having any suitable learnable or trainable internal parameters. For example, any of such input layer, one or more hidden layers, or output layer can be convolutional layers, whose learnable or trainable parameters can be convolutional kernels. As another example, any of such input layer, one or more hidden layers, or output layer can be dense layers, whose learnable or trainable parameters can be weight matrices or bias values. As still another example, any of such input layer, one or more hidden layers, or output layer can be batch normalization layers, whose learnable or trainable parameters can be shift factors or scale factors. Further still, in various cases, any of such layers can be any suitable types of neural network layers having any suitable fixed or non-trainable internal parameters. For example, any of such input layer, one or more hidden layers, or output layer can be non-linearity layers, padding layers, pooling layers, or concatenation layers.

In various aspects, voice recognition through the inference component 304 can be utilized to ensure authorized generation of virtual icons for vehicle operation. Vocal recognition and authorization can prevent other passengers of the vehicle from generating a virtual icon and interference with the driver's operation of the vehicle (e.g., a child in the vehicle vocally trying to change customization settings and causing the driver to confuse virtual icons) Voice recognition can mitigate such instances and prevent driver confusion when trying to locate various vehicle functionalities.

Furthermore, the interface component 110 can also use the inference component 304 to identify the current driver of the vehicle and automatically change the preferred customization settings and display based on the identified driver. The inference component 304 can use any suitable methods (e.g., voice recognition, key fobs, facial recognition, smartphone applications) to identify vehicle drivers. In any case, the interface component 110 can create profiles for different drivers of the vehicle and can display confirmation or selection of the identified driver to the current driver. Once the driver has confirmed or selected the correct user profile on the display component 108, the interface component 110 can be engaged to display the user's customized presets on the display component 108. For example, a vehicle can be shared between multiple people. Voice recognition of the current driver can be used to determine the appropriate customized display to be displayed on the display component 108 before the driver begins driving the vehicle (e.g., if a couple shares a vehicle, the screen can display the virtual icons and the layout of one partner's preferred settings when voice recognition identifies that partner as the driver).

In various instances, the inference component 304 can use the deep learning neural network 306 to learn driver behavior or preferred vehicle settings (e.g., driving mode, seat positioning, climate control, radio presets). Thus, the inference component 304 can engage the virtualization component 106 to automatically adjust various vehicle operations upon determination of the current driver (e.g., automatically adjust climate control settings, seat positioning, radio presets). Moreover, the inference component 304 can utilize any suitable vehicle sensors in addition to the vehicle microphones 302 to detect various internal or external vehicle conditions. Thus, the inference component 304 can mask or display certain virtual icons based on the determination of the vehicle conditions. For example, if rain is detected on the windshield of a vehicle, the virtual icon representative of operating windshield wipers can be displayed on the display component 108. Conversely, if no rain is detected on the vehicle's windshield, the virtual icon representative of operating windshield wipers can be masked or hidden on the display to avoid an abundance of virtual icons to be displayed and mitigate driver confusion when navigating vehicle operations. In various instances, the inference component 304 can also engage the interface component 110 to display a corresponding section of the vehicle's user manual upon warnings of various vehicle conditions. For example, if the engine light lights up on a vehicle, the interface component 110 can display a section of the user manual that instructs the driver how to handle such warning and situation. As another example, if low tire pressure is detected, a section in the user manual describing how to change the tires of the vehicle or how to refill tire air can be displayed.

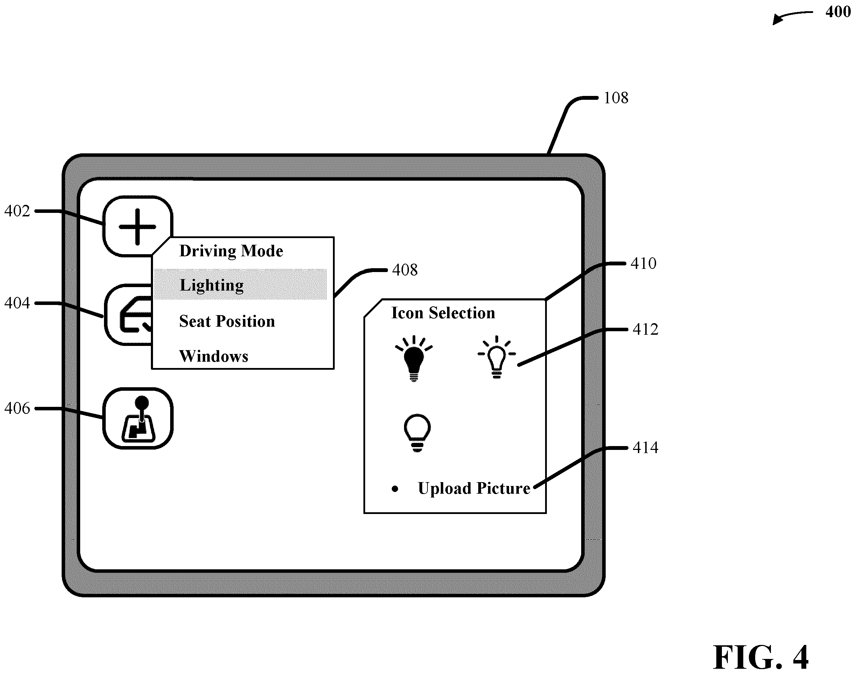

FIG. 4 illustrates an enlarged view of example GUIs that can be displayed on the display component in accordance with one or more embodiments described herein.

In various embodiments, depicted in FIG. 4 is an example GUI that can display and facilitate generation of a new virtual icon. In this example, the display component 108 displays a create icon 402 and two previously generated virtual icons, a windows icon 404 and a gear shift icon 406. In various aspects, the create icon 402 can enable the user to create a new virtual icon to operate a vehicle functionality upon two touch input activation.

In various embodiments, the windows icon 404 can, for example, can generate a new GUI or window upon touch activation that displays various control settings for actuating one or more windows of the vehicle (e.g., slide function to choose how much to open or close a window, open sunroof, close sunroof, lock windows).

In various aspects, the gear shift icon 406 can, for example, display the gear shifts of the vehicle in a new GUI or window upon touch activation of the icon (e.g., park, reverse, drive, neutral, overdrive, low gear, manual transmission gears). The user can then use double touch input to change the gear of the vehicle.

In this example, when a user activates the create icon 402, a scrollable window 408 (e.g., has a scrolling function to view all list items) can be displayed to list the vehicle functionalities that do not yet have a virtual icon. Thus, the user can select the desired functionality, vehicle lighting in this example, and an icon visual selection window 410 can be displayed to allow the user to select a preferred image from a selection of images 412 to represent the new virtual icon. The icon visual selection window 410 can also comprise an upload picture option 414 to allow the user to use an image not available in the selection of images 412 to represent the virtual icon.

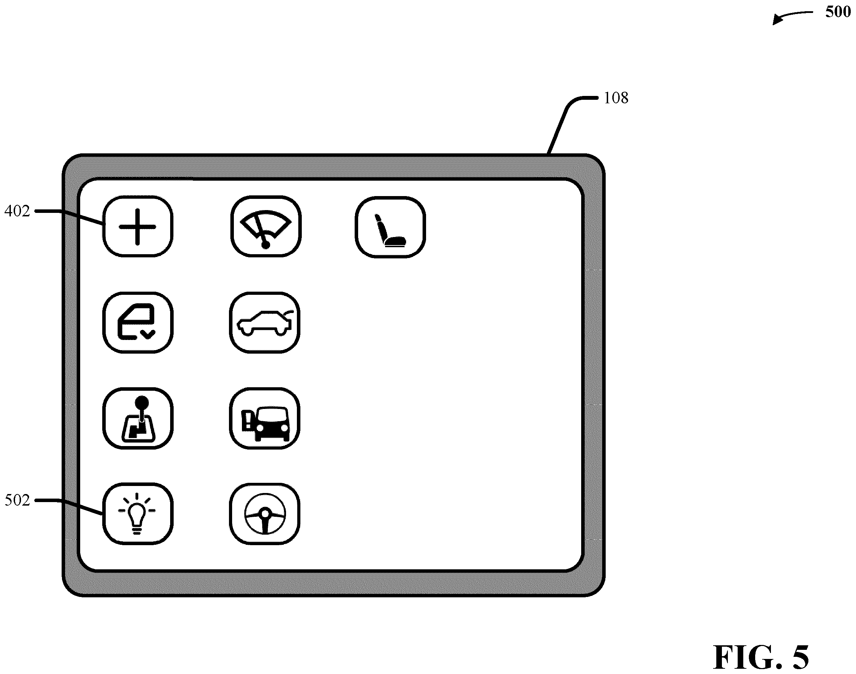

FIG. 5 illustrates an enlarged view of example GUIs that can be displayed on the display component in accordance with one or more embodiments described herein.

In various embodiments, depicted in FIG. 5 is an example GUI that can display generated virtual icons. In this example, the display component 108 can display a new generated icon 502, using the selected visual from the selection of images 412 to operate vehicle lighting. Furthermore, in this example, the GUI can other virtual icons that can operate other vehicle functionalities.

In various aspects, the virtualization component 106 can create an icon that can, for example, display and allow operation of windshield wiper settings and states in a new GUI or window upon touch activation of the icon (e.g., front windshield wiper speed, rear windshield wiper speed, spray washer fluid on the front windshield, spray washer fluid on the rear windshield, single swipe, auto-sensing mode). The user can then use double touch input to change the settings or modes of the vehicle windshield wipers.

In various instances, the virtualization component 106 can create an icon that can, for example, display and allow opening or closing of vehicle access points (e.g., trunk, hood, fuel door, charging port) in a new GUI or window upon touch activation of the icon (e.g., trunk release or lock, hood release or lock, fuel door release or lock, open or close charging port). The user can then use double touch input to open, close, or lock such vehicle access points.

In various embodiments, the virtualization component 106 can create an icon that can, for example, display and operate vehicle door locking functions in a new GUI or window upon touch activation of the icon (e.g., child lock, lock doors, unlock doors, auto lock or unlock). The user can then use double touch input to lock, unlock, or control vehicle door locking mechanisms.

In various aspects, the virtualization component 106 can create an icon that can, for example, display and control the driving modes of the vehicle in a new GUI or window upon touch activation of the icon (e.g., sports mode, eco mode, comfort mode, all-terrain mode, tow mode, electric or hybrid mode). The user can then use double touch input to change the driving mode of the vehicle.

In various aspects, the virtualization component 106 can create an icon that can, for example, display and control seat adjustments of the vehicle seats in a new GUI or window upon touch activation of the icon (e.g., height, recline angle, horizontal position, lumbar support, headrest height, headrest tilt, seat cushion tilt). The user can then use double touch input to change the seat adjustments of the vehicle seats.

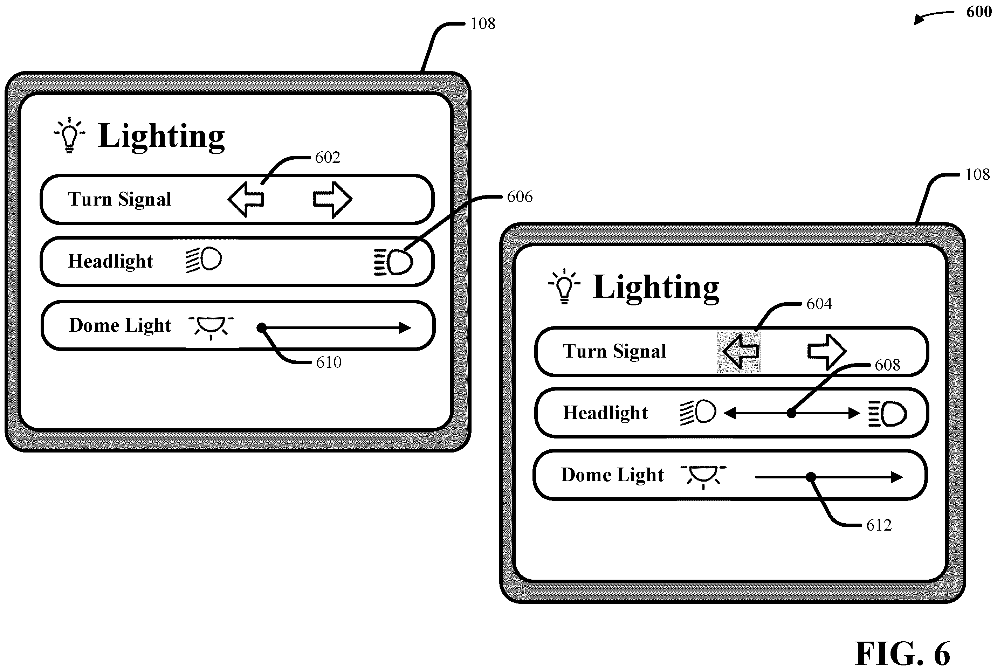

FIG. 6 illustrates an enlarged view of example GUIs that can be displayed on the display component in accordance with one or more embodiments described herein.

In various embodiments, depicted in FIG. 6 is an example GUI that can display lighting settings after selecting the new generated icon 502 to operate vehicle lighting. In this example, the complex touch patterns that can be used to activate vehicle functionality are displayed. For example, a first touch input and a second touch input can be used to operate the turn signals of a vehicle. A first touch input 602 can select the left turn signal, and a second touch input 604 can again select the left turn signal to confirm activation of the left turn signal of the vehicle. As another example, a first touch input followed by a slide from a first position to a second position can be used to operate the headlights of a vehicle. A first touch input 606 can select the headlight label or icons and a slide from a first position to a second position 608 can select a low beam or high beam setting of the headlights (e.g., slide from middle to left to select low beam, slide from middle to right to select high beam). As yet another example, a slide from a first position to a second position can be used to dim the dome light within a vehicle. The user can slide the marker from a first position 610 (e.g., current dim level) to a second position 612 (e.g., desired dim level).

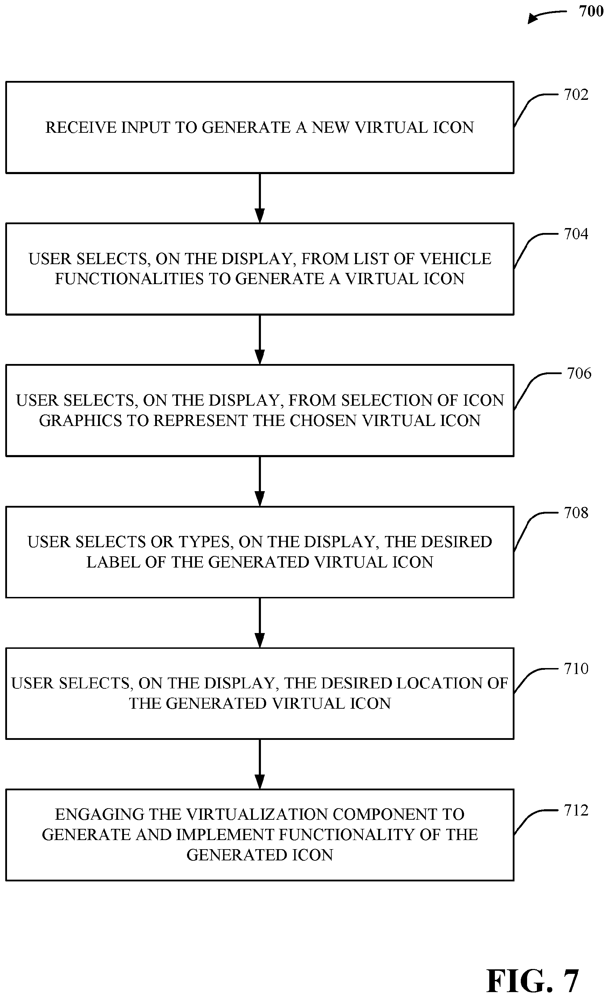

FIG. 7 illustrates a flow diagram of an example, non-limiting computer-implemented method 700 that can facilitate customizable safe touch control of vehicle operation in accordance with one or more embodiments described herein. In various cases, the system 100 can facilitate the computer-implemented method 700.

In various embodiments, act 702 can include receiving, by the interface component (e.g., via 110), input (e.g., voice input, touch input) to generate a new virtual icon.

In various cases, act 704 can include receiving, by the interface component (e.g., via 110), a selection by the user of the desired vehicle functionality for the new virtual icon.

In various aspects, act 706 can include receiving, by the interface component (e.g., via 110), a selection by the user of the desired icon graphic for the new virtual icon.

In various aspects, act 708 can include receiving, by the interface component (e.g., via 110), a selection or type input by the user of the desired label for the new virtual icon.

In various aspects, act 710 can include receiving, by the interface component (e.g., via 110), a selection by the user of the desired location of the new virtual icon on the home screen.

In various aspects, act 712 can include engaging, by the interface component (e.g., via 110), the virtualization component (e.g., 106) to generate and implement functionality of the new virtual icon.

For example, the user can select the create icon 402 on the display component 108 and select the functionality of operating the vehicle windshield wipers. The user can then select the preferred graphic to represent the virtual icon. Furthermore, the user can then change or keep the label of the new virtual icon (e.g., select wipers as the label, change the label to windshield wipers). The user can also select the desired location on the home screen of the virtual icon based on user preference (e.g., select the left most location on the dashboard display due to frequent use of vehicle windshield wipers). After the customizations of the new virtual icon have been selected, the virtualization component can be engaged to implement the functionality of the new virtual icon to enable operation of vehicle windshield wipers upon activation from double touch input of the user.

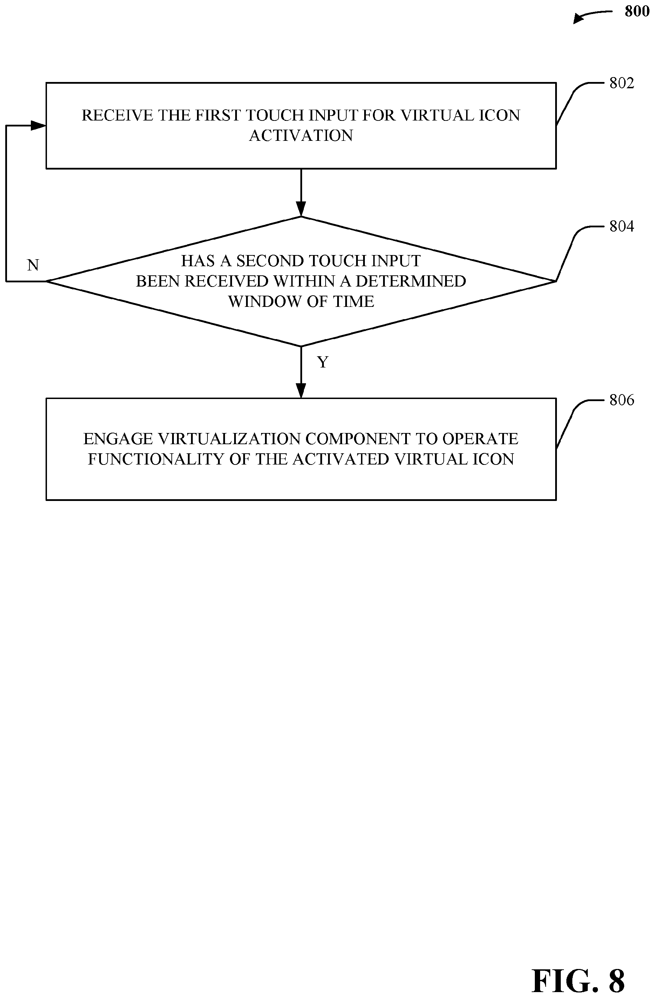

FIG. 8 illustrates a flow diagram of an example, non-limiting computer-implemented method 800 that can facilitate customizable safe touch control of vehicle operation in accordance with one or more embodiments described herein. In various cases, the system 100 can facilitate the computer-implemented method 800.

In various embodiments, act 802 can include receiving, by the interface component (e.g., via 110), a first touch input to activate the functionality of a virtual icon.

In various cases, act 804 can include determining, by the compliance component (e.g., via 202), whether the interface component (e.g., 110) has received a second touch input withing a determined time frame. If not (e.g., if the interface component 110 has not received a second touch input withing a determined time frame), the computer-implemented method 800 can proceed to act 802. If so (e.g., if the interface component 110 has received a second touch input withing a determined time frame), the computer-implemented method 800 can proceed to act 806.

In various aspects, act 806 can include engaging, by the compliance component (e.g., via 202) the virtualization component (e.g., 110) to operate and execute the functionality of the activated virtual icon.

For example, a user can unintentionally touch the display component 108 as a first touch input (e.g., mistakenly extending an arm into contact with the display). The user can then not touch the display component 108 for a given time as the first touch input was unintentional and the user does not want to change or operate any vehicle settings. After the determined time frame of activation from a second touch input has passed, the interface component 110 can disregard the first touch input and be ready to receive another first touch input to activate a vehicle functionality.

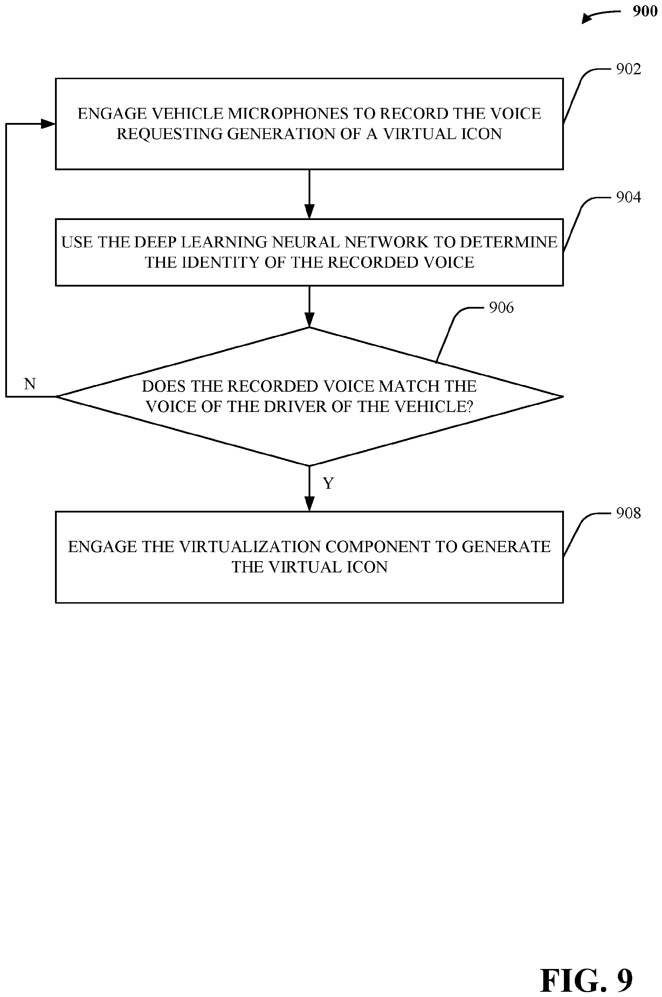

FIG. 9 illustrates a flow diagram of an example, non-limiting computer-implemented method 900 that can facilitate customizable safe touch control of vehicle operation in accordance with one or more embodiments described herein. In various cases, the system 100 can facilitate the computer-implemented method 900.

In various embodiments, act 902 can include engaging, by the inference component (e.g., 304), the vehicle microphones (e.g., 302) to record the voice requesting generation of a new virtual icon.

In various aspects, act 904 can include using, by the inference component (e.g., 304) the deep learning neural network (e.g., 306) to determine the identity of the recorded voice.

In various cases, act 906 can include determining, by the compliance component (e.g., via 202), whether the recorded voice matches the voice of the driver of the vehicle. If not (e.g., if the recorded voice does not match the voice of the driver of the vehicle), the computer-implemented method 900 can proceed to act 902. If so (e.g., the recorded voice does match the voice of the driver of the vehicle), the computer-implemented method 900 can proceed to act 908.

In various embodiments, act 908 can include engaging, by the compliance component (e.g., 202) the virtualization component (e.g., 106) to generate the virtual icon.

For example, a child in the backseat can attempt to voice generate a new virtual icon to operate gear shifting. The recorded voice of the child can be utilized by the deep learning neural network 306 to identify the voice of the speaker (e.g., is not the current driver of the vehicle, is the current driver of the vehicle). Based on the determination that the child's voice does not match the voice of the current driver of the vehicle, the compliance component 202 can disregard the request to generate a new virtual icon.

Although the herein disclosure mainly describes various embodiments as implementing deep learning neural networks (e.g., 602), this is a mere non-limiting example. In various aspects, the herein-described teachings can be implemented via any suitable machine learning models exhibiting any suitable artificial intelligence architectures (e.g., support vector machines, naive Bayes, linear regression, logistic regression, decision trees, random forest, reinforcement learning) or quantum computing architectures.

In various instances, machine learning algorithms or models can be implemented in any suitable way to facilitate any suitable aspects described herein. To facilitate some of the above-described machine learning aspects of various embodiments, consider the following discussion of artificial intelligence (AI). Various embodiments described herein can employ artificial intelligence to facilitate automating one or more features or functionalities. The components can employ various AI-based schemes for carrying out various embodiments/examples disclosed herein. In order to provide for or aid in the numerous determinations (e.g., determine, ascertain, infer, calculate, predict, prognose, estimate, derive, forecast, detect, compute) described herein, components described herein can examine the entirety or a subset of the data to which it is granted access and can provide for reasoning about or determine states of the system or environment from a set of observations as captured via events or data. Determinations can be employed to identify a specific context or action, or can generate a probability distribution over states, for example. The determinations can be probabilistic; that is, the computation of a probability distribution over states of interest based on a consideration of data and events. Determinations can also refer to techniques employed for composing higher-level events from a set of events or data.

Such determinations can result in the construction of new events or actions from a set of observed events or stored event data, whether or not the events are correlated in close temporal proximity, and whether the events and data come from one or several event and data sources. Components disclosed herein can employ various classification (explicitly trained (e.g., via training data) as well as implicitly trained (e.g., via observing behavior, preferences, historical information, receiving extrinsic information, and so on)) schemes or systems (e.g., support vector machines, neural networks, expert systems, Bayesian belief networks, fuzzy logic, data fusion engines, and so on) in connection with performing automatic or determined action in connection with the claimed subject matter. Thus, classification schemes or systems can be used to automatically learn and perform a number of functions, actions, or determinations.

A classifier can map an input attribute vector, z = (z₁, z₂, z₃, z₄, *zₙ*), to a confidence that the input belongs to a class, as by f(z) = *confidence*(*class*)*.* Such classification can employ a probabilistic or statistical-based analysis (e.g., factoring into the analysis utilities and costs) to determinate an action to be automatically performed. A support vector machine (SVM) can be an example of a classifier that can be employed. The SVM operates by finding a hyper-surface in the space of possible inputs, where the hyper-surface attempts to split the triggering criteria from the non-triggering events. Intuitively, this makes the classification correct for testing data that is near, but not identical to training data. Other directed and undirected model classification approaches include, e.g., naive Bayes, Bayesian networks, decision trees, neural networks, fuzzy logic models, or probabilistic classification models providing different patterns of independence, any of which can be employed. Classification as used herein also is inclusive of statistical regression that is utilized to develop models of priority.

The herein disclosure describes non-limiting examples. For ease of description or explanation, various portions of the herein disclosure utilize the term "each," "every," or "all" when discussing various examples. Such usages of the term "each," "every," or "all" are non-limiting. In other words, when the herein disclosure provides a description that is applied to "each," "every," or "all" of some particular object or component, it should be understood that this is a non-limiting example, and it should be further understood that, in various other examples, it can be the case that such description applies to fewer than "each," "every," or "all" of that particular object or component.

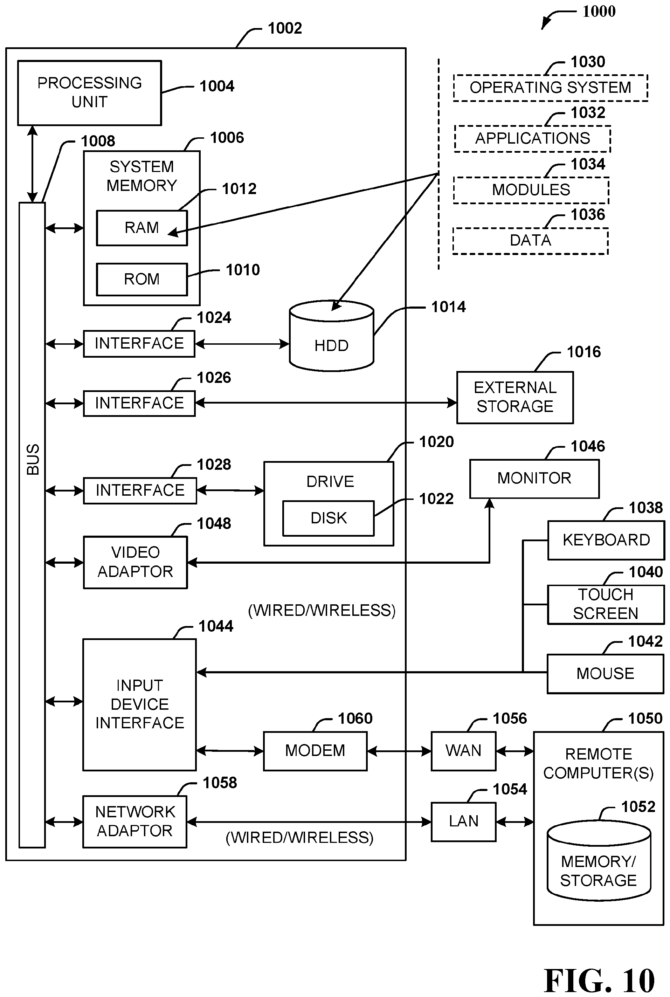

In order to provide additional context for various embodiments described herein, FIG. 10 and the following discussion are intended to provide a brief, general description of a suitable computing environment 1000 in which the various embodiments of the embodiment described herein can be implemented. While the embodiments have been described above in the general context of computer-executable instructions that can run on one or more computers, those skilled in the art will recognize that the embodiments can be also implemented in combination with other program modules or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multi-processor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments of the embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, or communications media, which two terms are used herein differently from one another as follows. Computer-readable storage media or machine-readable storage media can be any available storage media that can be accessed by the computer and includes both volatile and nonvolatile media, removable and nonremovable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can include, but are not limited to, quantum memories, or other tangible or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 10, the example environment 1000 for implementing various embodiments of the aspects described herein includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a non-volatile memory such as ROM, erasable programmable read only memory (EPROM), EEPROM, which BIOS contains the basic routines that help to transfer information between elements within the computer 1002, such as during startup. The RAM 1012 can also include a high-speed RAM such as static RAM for caching data.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and a drive 1020, e.g., such as a solid state drive, an optical disk drive, which can read or write from a disk 1022, such as a CD-ROM disc, a DVD, a BD, etc. Alternatively, where a solid state drive is involved, disk 1022 would not be included, unless separate. While the internal HDD 1014 is illustrated as located within the computer 1002, the internal HDD 1014 can also be configured for external use in a suitable chassis (not shown). Additionally, while not shown in environment 1000, a solid state drive (SSD) could be used in addition to, or in place of, an HDD 1014. The HDD 1014, external storage device(s) 1016 and drive 1020 can be connected to the system bus 1008 by an HDD interface 1024, an external storage interface 1026 and a drive interface 1028, respectively. The interface 1024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an embodiment, operating system 1030 can comprise one virtual machine (VM) of multiple VMs hosted at computer 1002. Furthermore, operating system 1030 can provide runtime environments, such as the Java runtime environment or the . NET framework, for applications 1032. Runtime environments are consistent execution environments that allow applications 1032 to run on any operating system that includes the runtime environment. Similarly, operating system 1030 can support containers, and applications 1032 can be in the form of containers, which are lightweight, standalone, executable packages of software that include, e.g., code, runtime, system tools, system libraries and settings for an application.

Further, computer 1002 can be enable with a security module, such as a trusted processing module (TPM). For instance with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1042. Other input devices (not shown) can include a microphone, an infrared (IR) remote control, a radio frequency (RF) remote control, or other remote control, a joystick, a virtual reality controller or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can be coupled to the system bus 1008, but can be connected by other interfaces, such as a parallel port, an IEEE 1394 serial port, a game port, a USB port, an IR interface, a BLUETOOTH^{®} interface, etc.

A monitor 1046 or other type of display device can be also connected to the system bus 1008 via an interface, such as a video adapter 1048. In addition to the monitor 1046, a computer typically includes other peripheral output devices (not shown), such as speakers, printers, etc.

The computer 1002 can operate in a networked environment using logical connections via wired or wireless communications to one or more remote computers, such as a remote computer(s) 1050. The remote computer(s) 1050 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1052 is illustrated. The logical connections depicted include wired/wireless connectivity to a local area network (LAN) 1054 or larger networks, e.g., a wide area network (WAN) 1056. Such LAN and WAN networking environments are commonplace in offices and companies, and facilitate enterprise-wide computer networks, such as intranets, all of which can connect to a global communications network, e.g., the Internet.

The computer 1002 can operate in a networked environment using logical connections via wireless communications based GPRS, GSM, 5G, LTE, 6G protocols.

When used in a LAN networking environment, the computer 1002 can be connected to the local network 1054 through a wired or wireless communication network interface or adapter 1058. The adapter 1058 can facilitate wired or wireless communication to the LAN 1054, which can also include a wireless access point (AP) disposed thereon for communicating with the adapter 1058 in a wireless mode.

When used in a WAN networking environment, the computer 1002 can include a modem 1060 or can be connected to a communications server on the WAN 1056 via other means for establishing communications over the WAN 1056, such as by way of the Internet. The modem 1060, which can be internal or external and a wired or wireless device, can be connected to the system bus 1008 via the input device interface 1044. In a networked environment, program modules depicted relative to the computer 1002 or portions thereof, can be stored in the remote memory/storage device 1052. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above, such as but not limited to a network virtual machine providing one or more aspects of storage or processing of information. Generally, a connection between the computer 1002 and a cloud storage system can be established over a LAN 1054 or WAN 1056 e.g., by the adapter 1058 or modem 1060, respectively. Upon connecting the computer 1002 to an associated cloud storage system, the external storage interface 1026 can, with the aid of the adapter 1058 or modem 1060, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

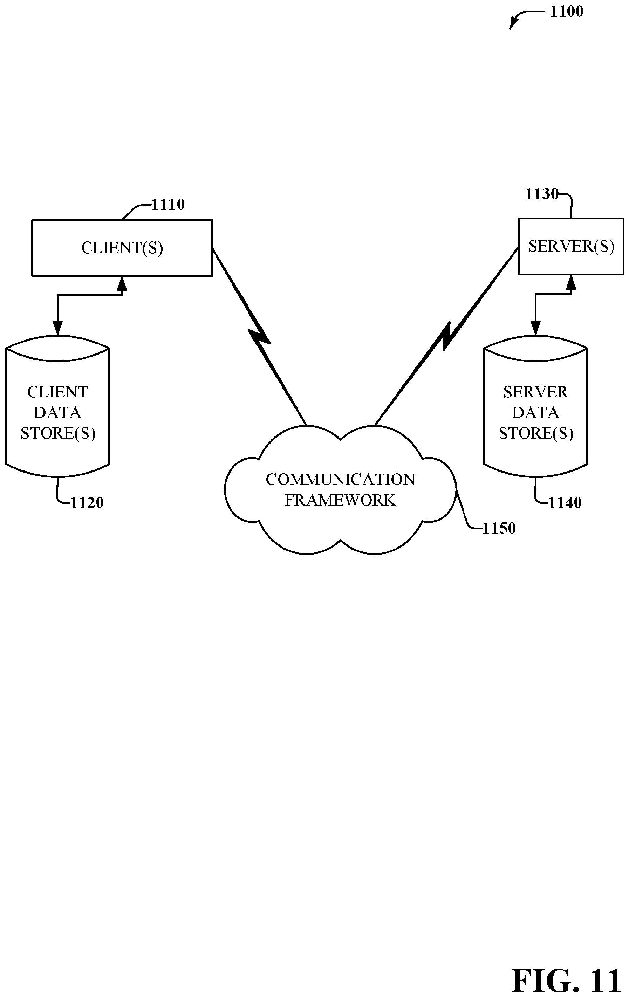

FIG. 11 is a schematic block diagram of a sample computing environment 1100 with which the disclosed subject matter can interact. The sample computing environment 1100 includes one or more client(s) 4110. The client(s) 4110 can be hardware or software (e.g., threads, processes, computing devices). The sample computing environment 1100 also includes one or more server(s) 1130. The server(s) 1130 can also be hardware or software (e.g., threads, processes, computing devices). The servers 1130 can house threads to perform transformations by employing one or more embodiments as described herein, for example. One possible communication between a client 4110 and a server 1130 can be in the form of a data packet adapted to be transmitted between two or more computer processes. The sample computing environment 1100 includes a communication framework 1150 that can be employed to facilitate communications between the client(s) 4110 and the server(s) 1130. The client(s) 4110 are operably connected to one or more client data store(s) 1120 that can be employed to store information local to the client(s) 4110. Similarly, the server(s) 1130 are operably connected to one or more server data store(s) 1140 that can be employed to store information local to the servers 1130.

The present invention may be a system, a method, an apparatus or a computer program product at any possible technical detail level of integration. The computer program product can include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network or a wireless network. The network can comprise copper transmission cables, optical transmission fibers, wireless transmission, routers, firewalls, switches, gateway computers or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the present invention can be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions can execute entirely on the user's computer, partly on the user's computer, as a standalone software package, partly on the user's computer and partly on a remote computer or entirely on the remote computer or server. In the latter scenario, the remote computer can be connected to the user's computer through any type of network, including a local area network (LAN) or a wide area network (WAN), or the connection can be made to an external computer (for example, through the Internet using an Internet Service Provider). In some embodiments, electronic circuitry including, for example, programmable logic circuitry, field-programmable gate arrays (FPGA), or programmable logic arrays (PLA) can execute the computer readable program instructions by utilizing state information of the computer readable program instructions to personalize the electronic circuitry, in order to perform aspects of the present invention.

Aspects of the present invention are described herein with reference to flowchart illustrations or block diagrams of methods, apparatus (systems), and computer program products according to embodiments of the invention. It will be understood that each block of the flowchart illustrations or block diagrams, and combinations of blocks in the flowchart illustrations or block diagrams, can be implemented by computer readable program instructions. These computer readable program instructions can be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart or block diagram block or blocks. These computer readable program instructions can also be stored in a computer readable storage medium that can direct a computer, a programmable data processing apparatus, or other devices to function in a particular manner, such that the computer readable storage medium having instructions stored therein comprises an article of manufacture including instructions which implement aspects of the function/act specified in the flowchart or block diagram block or blocks. The computer readable program instructions can also be loaded onto a computer, other programmable data processing apparatus, or other device to cause a series of operational acts to be performed on the computer, other programmable apparatus or other device to produce a computer implemented process, such that the instructions which execute on the computer, other programmable apparatus, or other device implement the functions/acts specified in the flowchart or block diagram block or blocks.

The flowcharts and block diagrams in the Figures illustrate the architecture, functionality, and operation of possible implementations of systems, methods, and computer program products according to various embodiments of the present invention. In this regard, each block in the flowchart or block diagrams can represent a module, segment, or portion of instructions, which comprises one or more executable instructions for implementing the specified logical function(s). In some alternative implementations, the functions noted in the blocks can occur out of the order noted in the Figures. For example, two blocks shown in succession can, in fact, be executed substantially concurrently, or the blocks can sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts or carry out combinations of special purpose hardware and computer instructions.

While the subject matter has been described above in the general context of computer-executable instructions of a computer program product that runs on a computer or computers, those skilled in the art will recognize that this disclosure also can or can be implemented in combination with other program modules. Generally, program modules include routines, programs, components, data structures, etc. that perform particular tasks or implement particular abstract data types. Moreover, those skilled in the art will appreciate that the inventive computer-implemented methods can be practiced with other computer system configurations, including single-processor or multiprocessor computer systems, mini-computing devices, mainframe computers, as well as computers, hand-held computing devices (e.g., PDA, phone), microprocessor-based or programmable consumer or industrial electronics, and the like. The illustrated aspects can also be practiced in distributed computing environments in which tasks are performed by remote processing devices that are linked through a communications network. However, some, if not all aspects of this disclosure can be practiced on stand-alone computers. In a distributed computing environment, program modules can be located in both local and remote memory storage devices.

As used in this application, the terms "component," "system," "platform," "interface," and the like, can refer to or can include a computer-related entity or an entity related to an operational machine with one or more specific functionalities. The entities disclosed herein can be either hardware, a combination of hardware and software, software, or software in execution. For example, a component can be, but is not limited to being, a process running on a processor, a processor, an object, an executable, a thread of execution, a program, or a computer. By way of illustration, both an application running on a server and the server can be a component. One or more components can reside within a process or thread of execution and a component can be localized on one computer or distributed between two or more computers. In another example, respective components can execute from various computer readable media having various data structures stored thereon. The components can communicate via local or remote processes such as in accordance with a signal having one or more data packets (e.g., data from one component interacting with another component in a local system, distributed system, or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "and/or" is intended to have the same meaning as "or." Moreover, articles "a" and "an" as used in the subject specification and annexed drawings should generally be construed to mean "one or more" unless specified otherwise or clear from context to be directed to a singular form. As used herein, the terms "example" or "exemplary" are utilized to mean serving as an example, instance, or illustration. For the avoidance of doubt, the subject matter disclosed herein is not limited by such examples. In addition, any aspect or design described herein as an "example" or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor can also be implemented as a combination of computing processing units. In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory or memory components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or computer-implemented methods herein are intended to include, without being limited to including, these and any other suitable types of memory.

What has been described above include mere examples of systems and computer-implemented methods. It is, of course, not possible to describe every conceivable combination of components or computer-implemented methods for purposes of describing this disclosure, but many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

The descriptions of the various embodiments have been presented for purposes of illustration, but are not intended to be exhaustive or limited to the embodiments disclosed. Many modifications and variations will be apparent without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Various non-limiting aspects of various embodiments described herein are presented in the following clauses.

Clause 1: A system, comprising: a processor that executes computer-executable components stored in a non-transitory computer-readable memory, the computer-executable components comprising: a virtualization component that generates virtual icons representative of hardware-based components of a vehicle; a display component that displays the virtualized icons on a touch display; and an interface component that receives input in connection with activation of the virtual icon to implement functionality of the associated hardware-based component.

Clause 2: The system of any preceding clause, wherein a compliance component ensures that the generated virtual icons touch coordinates satisfy ISO-26262 to at least level ASIL-A.

Clause 3: The system of any preceding clause, wherein the compliance component ensures that touch activation of the virtualized icons satisfies ISO-26262 at level ASIL-B.

Clause 4: The system of any preceding clause, wherein the display component requires double touch input to activate functionality of the virtualized component, and wherein the double touch event comprises one of the following complex touch patterns: two presses of a soft button, one press of a soft button and a slide from a first position to a second position, or a slide from a first position to a second position.

Clause 5: The system of any preceding clause, wherein the virtualization component generates a virtual icon operative of internal or external vehicle lighting and illumination.

Clause 6: The system of any preceding clause, wherein the virtualization component generates a virtual icon operative of actuating windows or a sunroof of the vehicle.

Clause 7: The system of any preceding clause, wherein the virtualization component generates a virtual icon operative of adjusting seat position.

Clause 8: The system of any preceding clause, wherein the virtualization component generates a virtual icon operative of vehicle door locking mechanisms.

Clause 9: The system of any preceding clause, wherein the virtualization component generates a virtual icon operative of controlling vehicle windshield wiper settings.

Clause 10: The system of any preceding clause, wherein the virtualization component generates a virtual icon operative of releasing or latching at least one of the following vehicle access points: the trunk, hood, charging port, or fuel door.

Clause 11: The system of any preceding clause, wherein the virtualization component generates a virtual icon operative of vehicle gear selection or driving performance modes.

Clause 12: The system of any preceding clause, wherein the virtualization component enables voice-based generation of virtual icons.

In various cases, any suitable combination or combinations of clauses 1-12 can be implemented.

Clause 13: A computer-implemented method, comprising: using a virtualization component to enable a user to generate virtual icons representative of hardware-based components of a vehicle; using a display component to display the virtualized icons on a touch display; and using an interface component to receive input in connection with activation of the virtualized icon to implement functionality of the associated hardware-based component.

Clause 14: The computer-implemented method of any preceding clause, further comprising requiring double touch to activate functionality of the virtualized component, and wherein the double touch event comprises one of the following complex touch patterns: two presses of a soft button, one press of a soft button and a slide from a first position to a second position, or a slide from a first position to a second position.

Clause 15: The computer-implemented method of any preceding clause, further comprising engaging the virtualization component to enable a user to generate a virtual icon operative of internal or external vehicle lighting and illumination.

Clause 16: The computer-implemented method of any preceding clause, further comprising engaging the virtualization component to enable a user to generate a virtual icon operative of actuating windows or a sunroof of the vehicle.

Clause 17: The computer-implemented method of any preceding clause, further comprising engaging the virtualization component to enable a user to generate a virtual icon operative of vehicle door locking mechanisms.

Clause 18: The computer-implemented method of any preceding clause, further comprising engaging the virtualization component to enable a user to generate a virtual icon operative of controlling vehicle windshield wipers settings.

In various cases, any suitable combination or combinations of clauses 13-18 can be implemented.

Clause 19: A computer program product comprising a non-transitory computer-readable memory having program instructions embodied therewith, the program instructions executable by a processor to cause the processor to: use a virtualization component to enable a user to generate virtual icons representative of hardware-based components of a vehicle; use a display component to display the virtualized icons on a touch display; and use an interface component to receive input in connection with activation of the virtualized icon to implement functionality of the associated hardware-based component.

Clause 20: The computer program product of any preceding clause, wherein the program instructions are further executable to cause the processor to: engage the virtualization component to enable a user to generate a virtual icon operative of internal or external vehicle lighting and illumination.

In various cases, any suitable combination or combinations of clauses 19-20 can be implemented.

In various cases, any suitable combination or combinations of clauses 1-20 can be implemented.

## Claims

1. A system, comprising:
a processor that executes computer-executable components stored in a non-transitory computer-readable memory, the computer-executable components comprising:
a virtualization component that generates virtual icons representative of hardware-based components of a vehicle;
a display component that displays the virtual icons on a vehicle display; and
an interface component that receives input in connection with activation of the virtual icon to implement functionality of the associated hardware-based component.

2. The system of claim 1, wherein a compliance component ensures that the generated virtualized icons touch coordinates satisfy ISO-26262 to at least level ASIL-A.

3. The system of claim 1, wherein the compliance component ensures that touch activation of the virtualized icons satisfies ISO-26262 at level ASIL-B.

4. The system of claim 3, wherein the display component requires double touch input to activate functionality of the virtualized component, and wherein the double touch input comprises one of the following complex touch patterns: two presses of a soft button, one press of a soft button and a slide from a first position to a second position, or a slide from a first position to a second position.

5. The system of claim 1, wherein the virtualization component generates a virtual icon operative of internal or external vehicle lighting and illumination.

6. The system of claim 1, wherein the virtualization component generates a virtual icon operative of actuating windows or a sunroof of the vehicle.

7. The system of claim 1, wherein the virtualization component generates a virtual icon operative of adjusting seat position.

8. The system of claim 1, wherein the virtualization component generates a virtual icon operative of vehicle door locking mechanisms.

9. The system of claim 1, wherein the virtualization component generates a virtual icon operative of controlling vehicle windshield wiper settings.

10. The system of claim 1, wherein the virtualization component generates a virtual icon operative of releasing or latching at least one of the following vehicle access points: the trunk, hood, charging port, or fuel door.

11. The system of claim 1, wherein the virtualization component generates a virtual icon operative of vehicle gear selection or driving performance modes.

12. The system of claim 1, wherein the virtualization component enables voice-based generation of virtual icons.

13. A computer-implemented method, comprising:
using a virtualization component to enable a user to generate virtual icons representative of hardware-based components of a vehicle;
using a display component to display the virtualized icons on a touch display; and
using an interface component to receive input in connection with activation of the virtualized icon to implement functionality of the associated hardware-based component.

14. The computer-implemented method of claim 13, further comprising engaging the virtualization component to enable a user to generate a virtual icon operative of controlling vehicle windshield wipers settings.

15. A computer program product comprising a non-transitory computer-readable memory having program instructions embodied therewith, the program instructions executable by a processor to cause the processor to:
use a virtualization component to enable a user to generate virtual icons representative of hardware-based components of a vehicle;
use a display component to display the virtualized icons on a touch display; and
use an interface component to receive input in connection with activation of the virtualized icon to implement functionality of the associated hardware-based component.
